# DEMANDE DE BREVET EUROPEEN

(11) **EP 3 588 426 A1**
(43) Date de publication de la demande: **01.01.2020**
(21) Numéro de dépôt: 19182696.5
(22) Date de dépôt: 26.06.2019
(51) Int. Cl.: G06Q 50/16

(54) **PROCÉDÉ D'APPARIEMENT D'UNE DESTINATION ET DE SON ÉCLAIREMENT**

(30) Priorité: 29.06.2018 BE 201805456
(71) Demandeur: L.O.A.D. Architecture SCPRL, 1030 Bruxelles (BE)
(72) Inventeur: MAROT, Grégory, 1030 Bruxelles (BE)
(74) Mandataire: Office Kirkpatrick

(57) **Abrégé**

L'invention concerne une méthode automatisée de prévision de moments favorables à certaines activités, en particulier une méthode automatisée d'appariement, pour un opérateur, d'une destination (12) et de l'éclairement de celle-ci, dans laquelle on détermine (B) au moins une plage horaire de présence de l'opérateur à ladite destination (12); on télécharge (C) les prévisions météorologiques relatives à l'appariement ; on enregistre (D), vue de la destination, la course du soleil pendant ladite plage; on déduit (E) l'éclairement de la combinaison au moins desdites prévisions et de ladite course et on procède à l'appariement (23). L'opérateur peut éventuellement sélectionner (F) un éclairement particulier qu'il souhaite avoir à la destination.

## Description

L'invention concerne le domaine de la prévision de moments favorables à certaines activités.
Il existe un certain nombre d'applications qui permettent à un utilisateur de visualiser, pour un lieu donné, les prévisions météorologiques pour les prochaines heures, voir les prochains jours. En particulier, les applications de radar météorologiques permettent de prévoir s'il va pleuvoir à un endroit précis dans les prochaines heures. Ainsi un utilisateur ayant prévu une activité doit consulter cette application et en déduire le meilleur créneau horaire pour cette activité. Si un utilisateur hésite entre plusieurs activités, c'est-à-dire entre plusieurs destinations, il va devoir regarder les prévisions météorologiques pour chacune de ces destinations et faire lui-même la synthèse des informations pour pouvoir choisir l'activité la plus propice.
De plus, ces applications ne prennent pas en compte d'autres paramètres pouvant être tout aussi importants que la météo, comme la luminosité en fonction de l'heure de la journée, qui peuvent être des éléments cruciaux pour conclure la vent d'un bien immobilier par exemple.
La demanderesse a donc jugé nécessaire de développer une méthode permettant de pallier à ces problèmes.
A cette fin, l'invention concerne une méthode automatisée d'appariement, pour un opérateur, d'une destination et de l'éclairement de celle-ci, dans laquelle:
- on détermine au moins une plage horaire de présence de l'opérateur à ladite destination ;
- on télécharge les prévisions météorologiques relatives à l'appariement ;
- on enregistre, vue de la destination, la course du soleil pendant ladite plage ;
- on déduit l'éclairement de la combinaison au moins desdites prévisions et de ladite course et
- on procède à l'appariement.

La méthode de l'invention permet ainsi à un opérateur de connaitre les conditions d'éclairement, c'est-à-dire la quantité de lumière ou la luminosité, à l'endroit où il désire se rendre, sa destination, durant une plage de temps où il serait disponible, sa plage horaire de présence.
L'appariement consiste donc à établir l'évolution de l'éclairement à la destination, durant la plage horaire de présence de l'opérateur. Cette plage horaire de présence correspond à une plage horaire de disponibilité de l'opérateur, durant laquelle il est susceptible d'être présent à la destination.
Avantageusement, l'opérateur peut également sélectionner un éclairement particulier souhaité à la destination et on extrait de l'appariement une plage temporelle durant laquelle ledit éclairement particulier est réalisé, ou prévu, si possible, c'est-à-dire si un tel éclairement particulier est prévu durant la plage horaire de présence de l'opérateur.
Il est ainsi possible de synchroniser le calendrier de disponibilités de l'utilisateur, en sélectionnant une plage temporelle et des conditions météorologiques pour obtenir, en fonction de l'heure de la journée et de la saison, des paramètres d'éclairement particulier pour un lieu donné.
La destination à sélectionner pour la mise en oeuvre de l'invention est de préférence une adresse précise, voir même, une subdivision d'une adresse donnée, comme par exemple un numéro de bâtiment ou d'appartement.
La course du soleil est liée d'une part à la déclinaison solaire, c'est-à-dire à la date, ainsi qu'à l'heure de la journée à laquelle on se place.
L'éclairement peut également dépendre de facteurs intrinsèques ou paramètres urbanistiques du lieu de destination, comme par exemple des ombres portées. En effet, si la destination, ou l'activité que l'on souhaite faire à la destination, est située en intérieur, comme par exemple la visite d'un appartement par un agent immobilier, les paramètres d'éclairement peuvent dépendre de l'orientation géographique des fenêtres, de leurs dimensions, de l'étage auquel est situé le l'appartement, des constructions aux alentours qui pourraient générer de l'ombre à certaines heures, etc... Pour une activité en extérieur, la luminosité à la terrasse d'un restaurant peut également dépendre de son orientation géographique et des constructions à proximité.
L'éclairement particulier correspond à l'attente de l'utilisateur par rapport à l'activité qu'il cherche à faire à la destination. Par exemple, un agent immobilier peut fixer comme condition favorable l'ensoleillement maximal de certaines pièces d'un appartement ou d'une maison, qui peuvent correspondre à un soleil rasant en fin de journée ; un utilisateur peut rechercher un parc de jeux pour enfants qui présente des zones ombragées ; un autre utilisateur peut rechercher une terrasse de café ensoleillé durant sa pause déjeuner ; un photographe peut vouloir de la pluie et du vent au lever du jour...

La plage plage horaire de présence de l'opérateur peut être courte, quelques heures, ou plus longue, plusieurs jours. Elle peut correspondre à plusieurs sous-plages renseignées, selon les disponibilités de l'utilisateur sur, par exemple, toute une semaine.
La méthode de l'invention peut permettre de sélectionner plusieurs lieux ou destinations et dans ce cas on répète les étapes de la méthode de l'invention pour chaque destination.
La méthode de l'invention permet ainsi de choisir parmi plusieurs destinations d'intérêts celles qui sont susceptibles de présenter une plage temporelle favorable ou bien de planifier, de façon optimale la visite de tous les lieux de destination.
La méthode de l'invention est de préférence mise en oeuvre par des moyens informatiques, par exemple au moyen d'une application installée sur un smartphone ou d'un logiciel installé sur un ordinateur. L'invention couvre également un programme informatique qui, lorsqu'il est mis en oeuvre réalise, au moins en partie, les étapes de la méthode de l'invention.
L'invention sera mieux comprise à l'aide de la description suivante de la forme de réalisation préférée de l'invention, en référence au dessin en annexe sur lequel :
la figure 1 illustre schématiquement une situation à laquelle s'applique la mise en oeuvre de l'invention ;
la figure 2 est un schéma bloc d'une première forme de mise en oeuvre de la méthode de l'invention, et
la figure 3 est un schéma bloc d'une autre forme de mise en oeuvre de l'invention.

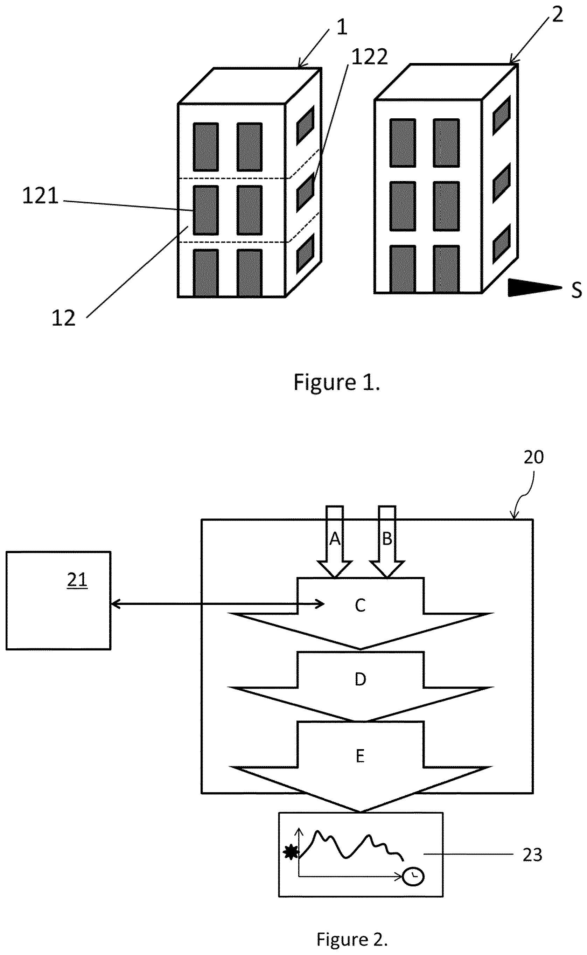

En référence à la figure 1, un agent immobilier qui a un logement à vendre, ici un appartement 12, souhaite le faire visiter à des clients dans des conditions optimales d'ensoleillement. L'appartement 12 est situé au deuxième étage d'un immeuble 1 comportant trois étages. Un second immeuble 2, d'également trois étages, est situé à proximité au sud de l'immeuble 1. L'appartement 12 comporte deux baies vitrées 121 orientées vers l'ouest et une fenêtre 122 orientée au sud.
Pour déterminer le moment le plus propice à une visite, l'agent immobilier utilise une application informatique permettant de déterminer ce moment par la mise en oeuvre de plusieurs étapes.
En référence à la figure 2, tout d'abord, dans une étape A de la méthode mise en oeuvre par l'application 20, l'agent immobilier renseigne ou sélectionne la destination, c'est-à-dire ici l'adresse de l'appartement. L'adresse comprend ici la rue, le numéro dans la rue, mais peut également comprendre un identifiant de l'appartement particulier, soit au moyen d'un numéro de boite aux lettres, soit en notifiant ou renseignant explicitement dans l'application que l'appartement est au deuxième étage.
Optionnellement, l'appartement peut être localisé précisément par interaction de l'application avec un serveur informatique comprenant un annuaire détaillé d'adresses, par exemple un cadastre en ligne, un registre des connexions électriques, ou du réseau de distribution d'eau.
Si l'identifiant du lieu ne permet pas de déduire où sont les ouvertures de l'appartement, il peut éventuellement être prévu dans l'application la possibilité pour l'agent immobilier de renseigner ces informations, comme par exemple, le nombre de fenêtres, portes fenêtres, leurs dimensions ou leur orientation cardinale. L'application 20 peut prévoir des possibilités particulières de renseignement d'informations, adaptées au public auquel l'application est destinée.

Dans une deuxième étape B, l'agent immobilier sélectionne, par exemple dans un calendrier, au moins une plage horaire ou il est lui-même disponible pour effectuer des visites et/ou des plages horaires ou des clients potentiels sont également disponibles. Cette plage horaire de présence ou de disponibilité peut également être une plage continue ou une combinaison de créneaux horaires isolés.
Par exemple, l'agent immobilier peut renseigner qu'il est disponible tous les jours ouvrables de la semaine entre 9h et 18h. Il peut, s'il connait les disponibilités d'un client particulier, également renseigner ces disponibilités afin de pourvoir sélectionner le meilleur moment pour la visite, convenant à la fois à son client et à lui-même.
Dans une étape C, l'agent immobilier déclenche le téléchargement des prévisions météorologiques pour la destination sélectionnée, ici l'adresse de l'appartement durant la plage horaire de présence.
L'application informatique peut être programmée pour se connecter à un serveur météorologique prédéterminé 21 comprenant des prévisions météorologiques. Ce serveur peut être un serveur spécifique mis en place par la société exploitant l'application informatique, et convertissant par exemple les données météorologiques brutes générées par les instituts de météorologie. Le serveur en question peut également être directement le serveur d'un institut météorologique ou tout autre organisme mettant à disposition des prévisions météorologiques.
Les prévisions météorologiques ne pouvant se faire avec une grande précision, ni géographique, ni temporelle, il est possible d'ajouter, par exemple, un indice de confiance ou toute autre notion permettant d'évaluer la qualité de la prévision. Si la plage temporelle sur laquelle les prévisions météorologies sont souhaitées est trop éloignée, l'application peut éventuellement afficher un message indiquant que des prévisions pour cette plage ne sont pas disponibles.
Dans une étape D, on enregistre la course du soleil au cours de la plage temporelle pour la destination.
L'enregistrement peut résulter d'un téléchargement des informations pertinentes depuis un serveur informatique éloigné auquel l'application se connecte. Il peut également résulter d'un calcul effectué par l'application elle-même, sur son support informatique ou à distance.
La course du soleil prend en compte la date, et plus particulièrement la déclinaison solaire à cette date et calcule les heures auxquelles il fera jour ainsi que la hauteur et l'orientation cardinale du soleil à chaque moment de la plage temporelle.
Dans une étape E, l'application combine les prévisions météorologiques téléchargée à l'étape C et la position solaire calculée à l'étape D sur la plage temporelle sélectionnée à l'étape B, pour le lieu, ou destination, choisi à l'étape A pour établir l'évolution de l'éclairement à la destination, durant la plage horaire de présence de l'opérateur.

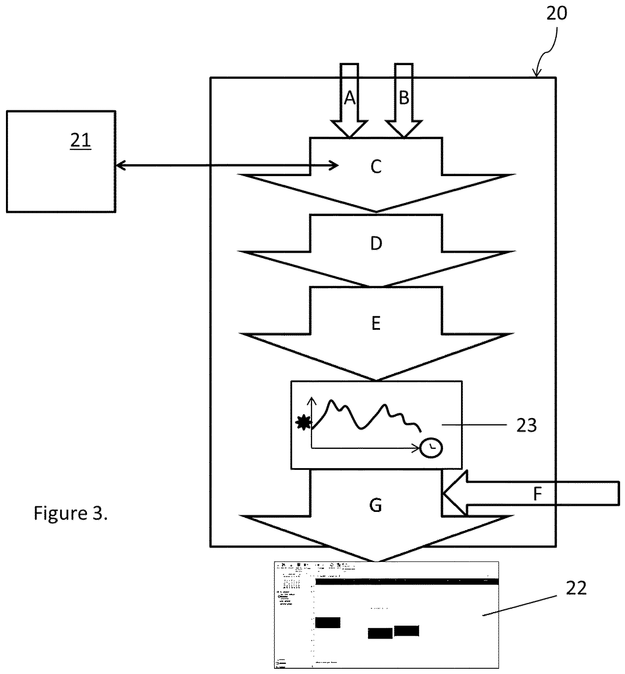

Cet appariement peut être visualisé, par exemple sous forme d'un graphe 23, sur le support informatique sur lequel est installée l'application 20.
En référence à la figure 3, reprenant les mêmes notations que la figure 2, il peut être prévu que l'agent immobilier sélectionne, dans une étape F, un éclairement particulier qu'il souhaite avoir à la destination, c'est-à-dire pour la visite de l'appartement 12. Par exemple, Il peut souhaiter que le salon/séjour de l'appartement soit ensoleillé lors de la visite. Si le salon/séjour correspond aux baies vitrées 121, cela implique que la lumière vienne de l'ouest.
On extrait alors de l'appariement, dans une étape G, une plage temporelle durant laquelle ledit éclairement particulier est réalisé, ou prévu.
En particulier ici, l'application va permettre d'identifier s'il existe, en semaine, entre 9h et 18h, des moments dits favorables durant lesquels le ciel sera dégagé et le soleil, venant de l'ouest, pénétrera dans le salon/séjour de l'appartement 12.
Si un ou plusieurs moments sont identifiés, ils peuvent être listés, par exemple, sous un format facilement identifiable dans un calendrier électronique 22, ou sous forme de liste de plages horaire.
Si aucun moment favorable n'est identifié, l'application peut émettre un message le notifiant à l'agent immobilier. Il peut néanmoins avoir des options de repli, où une deuxième condition, correspondant à une luminosité moins favorable peut être sélectionnée. Cette deuxième condition peut par exemple être renseignée dès le début et identifiée comme une position de repli, ou n'être renseignée qu'au cas où aucun moment favorable n'est identifié avec la première condition.
Par exemple, l'agent immobilier peut renseigner que si aucun moment favorable n'est identifié, correspondant à l'ensoleillement de séjour/salon, on peut par exemple choisir de sélectionner l'ensoleillement de la cuisine qui correspond à la fenêtre 122.
Le lieu sélectionné à l'étape A et les plages horaires sélectionnées à l'étape B restent les mêmes, de même que les prévisions météorologiques téléchargées à l'étape C et course du soleil calculée et enregistrée à l'étape D. L'application ne fait alors que répéter l'étape G, en prenant en compte la nouvelle condition de luminosité.
L'application va alors identifier s'il existe, en semaine, entre 9h et 18h, des moments dits favorables durant lesquels le ciel sera dégagé et le soleil, venant du sud, pénétrera dans la cuisine de l'appartement 12 par la fenêtre 122.

Avantageusement, pour effectuer l'appariement ou identifier un moment favorable, c'est à dire par exemple au cours de l'étape E ou lors d'une étape additionnelle ultérieure, l'application peut également prendre en comptedes paramètres urbanistiques dont peut dépendre l'éclairement. On peut en particulier déterminer des ombres portées en fonction de ces paramètres urbanistiques, comme par exemple l'ombre éventuellement projetée par l'immeuble 2 sur la façade sud de l'immeuble 1, en fonction de la déclinaison solaire et de l'heure de la journée.
Pour calculer la projection de l'ombre de certains bâtiments sur d'autres bâtiments, on peut se baser sur un certain nombre de paramètres d'urbanisme, qui peuvent être définis par défaut, comme par exemple une largeur de rue de 15 mètres, ou une hauteur des bâtiments voisins égales à la hauteur du bâtiment visité. Il peut être prévu que l'opérateur, ici l'agent immobilier puisse, par exemple à l'aide d'un menu de paramètres avancés, modifier ces informations au cas par cas, par exemple lors de sa première visite du bien.
Il est également envisageable que ces informations soient rassemblées et mises à dispositions sur un serveur informatique distant de données d'urbanisme, auquel il est possible d'accéder par une connexion internet.
Une étape de connexion à ce serveur, pour télécharger des informations d'urbanisme, peut être ajoutée à la méthode de l'invention. Cela est particulièrement intéressant pour l'application de la méthode de l'invention à d'autres activités que celles d'un agent immobilier.
Par exemple, dans le domaine du tourisme, une personne peut, lors d'un séjour touristique, vouloir déjeuner au soleil en terrasse d'un restaurant particulier.
Grâce à la méthode de l'invention, il va pouvoir sélectionner le meilleur moment pour son déjeuner, en fonction des prévisions météorologiques mais également de la luminosité ou éclairement de la terrasse du restaurant, dont les heures d'exposition au soleil peuvent dépendre de la saison (déclinaison solaire) ainsi que des constructions alentours susceptible d'ombrager la terrasse à certains horaires.
Si le touriste hésite entre plusieurs restaurants, la méthode de l'invention peut également lui permettre de renseigner plusieurs lieux, plusieurs restaurants, et de déterminer pour chaque lieu le ou les moments les plus favorables pour y déjeuner. Il pourra par exemple visualiser sur un graphe l'éclairement superposé du plusieurs terrasses de restaurants et choisir celui qui lui semble le mieux. S'il renseigne une condition d'éclairement particulier, il pourra éventuellement visualiser les restaurants présentant ces conditions d'éclairement sur une plage horaire qu'il a déterminé.
La méthode de l'invention peut permettre de visualiser pour chaque lieu les moments les plus favorables, avec, éventuellement un critère de fiabilité de la prédiction, ce qui peut permettre à l'utilisateur de faire un choix éclairé du restaurant où il va déjeuner.
La méthode de l'invention peut également présenter un intérêt pour un photographe, qui voudrait, par exemple, prendre des photographies de paysages sous des éclairements variés et/ou variant rapidement. En ayant à sa disposition un graphe de l'évolution de la luminosité dans un lieu d'intérêt, sa destination, il peut choisir un créneau horaire ou ces variations rapides d'éclairage sont susceptibles de se produire.

## Revendications

1. Méthode automatisée d'appariement, pour un opérateur, d'une destination (12) et de l'éclairement de celle-ci, dans laquelle:
- on détermine (B) au moins une plage horaire de présence de l'opérateur à ladite destination (12);
- on télécharge (C) les prévisions météorologiques relatives à l'appariement ;
- on enregistre (D), vue de la destination, la course du soleil pendant ladite plage ;
- on déduit (E) l'éclairement de la combinaison au moins desdites prévisions et de ladite course et
- on procède à l'appariement (23).

2. Méthode selon la revendication 1, dans laquelle
- l'opérateur sélectionne (F) un éclairement particulier pour la destination et
- on extrait (G) de l'appariement, le cas échéant, au moins une plage temporelle durant laquelle ledit éclairement particulier est prévu.

3. Méthode selon l'une des revendications 1 et 2, dans laquelle la destination est une adresse.

4. Méthode selon l'une des revendications 1 à 3, dans laquelle la course du soleil est calculée à partir de la déclinaison solaire.

5. Méthode selon l'une des revendications 1 à 4, dans laquelle on déduit l'éclairement aussi de paramètres urbanistiques à la destination.

6. Méthode selon la revendication 5, dans laquelle on détermine des ombres portées en fonction des paramètres urbanistiques.

7. Méthode selon l'une des revendications 1 à 6, selon laquelle on apparie plusieurs destinations à leur éclairement en répétant les étapes de la méthode de l'invention pour chaque destination.

8. Programme informatique (20) pour la mise en oeuvre de la méthode automatisée de l'une des revendications 1 à 7.
